# EUROPÄISCHE PATENTSCHRIFT

(11) **EP 3 668 746 B1**
(45) Veröffentlichungstag und Bekanntmachung des Hinweises auf die Patenterteilung: **25.11.2020**
(21) Anmeldenummer: 18719830.4
(22) Anmeldetag: 20.04.2018
(51) Int. Cl.: B60L 53/31, H02G 3/04

(54) **LADESTATION FÜR ELEKTROFAHRZEUGE**
CHARGING STATION FOR ELECTRIC VEHICLES
STATION DE CHARGE POUR VÉHICULES ÉLECTRIQUES

(30) Priorität: 18.08.2017 DE 102017118916
(43) Veröffentlichungstag der Anmeldung: 24.06.2020
(73) Patentinhaber: Innogy SE, 45128 Essen (DE)
(72) Erfinder: WAFFNER, Jürgen, 45307 Essen (DE); MEIER, Jörg, 54455 Serrig (DE)
(74) Vertreter: Cohausz & Florack
(86) Internationale Anmeldenummer: PCT/EP2018/060156
(87) Internationale Veröffentlichungsnummer: WO 2019/034292

(56) Entgegenhaltungen:
- EP-A1- 2 993 748
- CN-B- 102 616 215
- DE-A1-102009 024 721
- DE-A1-102010 027 050
- DE-U1- 8 808 772

## Beschreibung

Der Gegenstand betrifft eine Ladestation für Elektrofahrzeuge.

Der Ausbau der Ladeinfrastruktur ist von entscheidender Bedeutung für die Akzeptanz der Elektromobilität. Der Ausbau führt zu einer erhöhten Verfügbarkeit, insbesondere in öffentlichen und halböffentlichen Räumen.

Gerade der Ausbau der Ladeinfrastruktur ist jedoch mit erheblichen Investitionen für die Infrastrukturbetreiber verbunden. Insbesondere allein die Installation der Ladestation beinhaltet heutzutage unterschiedlichste Gewerke. Zunächst muss der Verteilnetzbetreiber (DSO) ein Erdkabel an den geplanten Aufstellungsort der Ladestation verlegen. Bisher erfolgt die Erstellung des Netzanschlusses am Hausanschlusskasten (HAK) durch einen dafür qualifizierten Elektriker. Anschließend erfolgen durch einen Tiefbauer die Ausschachtung und der Einbau des Bodenfundaments. Danach wird durch den Betreiber der Ladestation auf dem Bodenfundament die Ladestation aufgesetzt. Abschließend erfolgt die Installation der Ladeelektronik durch einen Monteur des Ladestationsbetreibers.

Diese vielen Gewerke führen nicht nur zu einer zeitlichen Streckung des Aufbauvorgangs, sondern auch zu erhöhten Kosten und einem erheblichen Organisationsaufwand.

Die Dokumente CN102616215B und EP2993748A1 offenbaren Ladestationen für elektrische Fahrzeuge.

Daher lag dem Gegenstand die Aufgabe zugrunde, die Installation von Ladestationen zu vereinfachen.

Diese Aufgabe wird durch eine Ladestation nach Anspruch 1 gelöst.

Es ist erkannt worden, dass der Verteilnetzbetreiber in der Lage ist, die Ladestation bis zur Netzanschlusssicherung selbständig zu installieren. Gegenständlich wird nun vorgeschlagen, dass die Ladestation an einem Stück installiert wird, indem neben dem Bodenfundament gleichzeitig in einer einzigen Baugruppe auch die Säule der Ladestation, welche zur Aufnahme der Ladeelektronik eingerichtet ist, installiert wird. Dazu wird die Ladestation einstückig aus Bodenfundament und Säule zur Verfügung gestellt und unmittelbar in die Ausschachtung am Ausstellungsort eingesetzt. Anschließend kann der Verteilnetzbetreiber, der auch das Erdkabel verlegt hat, die so aufgestellte Ladestation elektrisch bis zur Netzanschlusssicherung installieren, den Schacht verfüllen und die Ladestation elektrisch für die Inbetriebnahme zur Verfügung stellen. Anschließend ist es lediglich notwendig, die Ladeelektronik in die Ladestation einzusetzen und die Ladestation ist betriebsbereit.

Es wird vorgeschlagen, dass in der Säule eine Netzanschlusssicherung angeordnet ist. Insbesondere in einem eigenen Gehäuse (HAK) ist in der Säule eine Netzanschlusssicherung angeordnet. An diese Netzanschlusssicherung wird das Erdkabel unmittelbar angeschlossen, indem es durch das Bodenfundament und die Säule bis zur Sicherung geführt ist. Der Verteilnetzbetreiber kann diese Installationsarbeiten durchführen.

In der Säule ist eine quer zu der Längsachse der Säule verlaufende Öffnung vorgesehen. Die Öffnung kann auch parallel zu zumindest einer der Seitenwände der Säule verlaufen. Die Öffnung erstreckt sich in das Innere der Säule. Somit ist eine Öffnung vorgesehen, die an der Außenhaut der Säule eine Aufnahme für eine Ladeelektronik bildet. Die Öffnung kann als Durchgangsöffnung gebildet sein. In der Mitte der Öffnung, d.h. mittig von den die Öffnung begrenzenden Außenwänden kann die Netzanschlusssicherung, beispielsweise in einem eigenen Gehäuse vorgesehen sein. Beidseitig des Gehäuses der Netzanschlusssicherung können Kontakte vorgesehen sein, die mit einer Ladeelektronik verbunden werden können. Auch ist es möglich, dass die Öffnung nur eine Außenwand der Ladesäule durchbricht und somit nur eine Aufnahme für eine Ladeelektronik vorgesehen ist. Die Öffnung ist vorzugsweise mit Wänden gegenüber dem Inneren der Säule abgegrenzt. Durch eine Wand kann das Erdkabel geführt sein.

Die Öffnung dient somit zur Aufnahme einer Netzanschlusssicherung und/oder eines Hausanschlusskastens. Die elektrische Verantwortung des Verteilnetzbetreibers endet an der Netzanschlusssicherung, respektive dem Hausanschlusskasten. Dort sind die notwendigen Sicherungen vorgesehen, um das Netz gegenüber der Last abzusichern. Die Netzanschlusssicherung bzw. der Hausanschlusskasten können in einem eigenen Gehäuse innerhalb der Öffnung angeordnet sein. An dem dort angeordneten Gehäuse können elektrische und gegebenenfalls mechanische Kontakte vorgesehen sein, zur Aufnahme einer vorzugsweise in einem Gehäuse eingehausten Ladeelektronik. Es ist denkbar, dass die Ladeelektronik, samt Messeinrichtung, und/oder Leistungsschaltung, und/oder Ladekabelbuchse, und/oder Kommunikationstechnik und/oder dergleichen in einem einzigen Gehäuse eingehaust ist. An diesem Gehäuse können an einer Rückwand elektrische Kontakte vorgesehen sein, die mit den Kontakten des Hausanschlusskastens bzw. des Gehäuses der Netzanschlusssicherung korrespondieren. Eine so eingerichtete Ladeelektronik kann als Ganzes in die Ladestation respektive die Öffnung eingebaut werden. Hierzu ist es nicht einmal notwendig, dass ein Elektriker die Ladeelektronik installiert. Vielmehr ist es möglich, die Ladeelektronik in dem Gehäuse vorkonfektioniert zur Verfügung zu stellen. Es ist nur notwendig, die Ladeelektronik mit dem Gehäuse in die entsprechende Aufnahme der Säule der Ladestation einzusetzen und die Ladestation ist betriebsbereit.

Wie bereits erläutert, kann die Öffnung zwei Außenwände der Säule durchbrechen. Jede Durchbrechung kann als Aufnahme für ein Gehäuse einer Ladeelektronik gebildet sein. Somit ist es möglich, beidseitig des Gehäuses des Hausanschlusskastens bzw. der Netzanschlusssicherung eine Ladeelektronik in die Ladesäule einzusetzen und elektrisch mit dem Verteilnetz zu verbinden.

Gemäß der Erfindung wird vorgeschlagen, dass die Öffnung als Aufnahme für eine Ladeelektronik gebildet ist. Insbesondere können in der Öffnung Anschlusskontakte für die Ladeelektronik gebildet sein. Diese Anschlusskontakte sind vorzugsweise an einer Außenseite eines Gehäuses, welches die Netzanschlusssicherung umgibt, angeordnet. Die Kontakte können als Steckkontakte gebildet sein.

Zur Montage der Ladeelektronik sind Verriegelungsmittel an der Öffnung vorgesehen, die die Ladeelektronik mechanisch in der Öffnung verriegeln. Dies kann beispielsweise durch Schnappverschlüsse oder dergleichen ermöglicht werden. Es ist erkannt worden, dass in einem Grundkörper der Ladeelektronik (auch Ladeboxeinheit genannt) die wesentliche Technik zur Steuerung der Ladeelektronik und/oder Ladesäule (z.B. Steuerschaltung, Benutzerschnittstelle, Ein-/Ausgabemittel, Sensoren, Prozessor, Speicher, um einige nicht limitierende Beispiele zu nennen) verbaut sein kann. Beispielsweise kann als Eingabemittel eine Tastatur oder dergleichen vorgesehen sein. Als Ausgabemittel kann beispielsweise ein Display oder dergleichen vorgesehen sein, so dass eine Interaktion mit einem Besitzer oder Nutzer eines Elektrofahrzeugs möglich ist. Denkbar ist auch eine kombinierte Eingabe-/Ausgabeschnittstelle, beispielsweise ein berührungsempfindliches Display, welches sowohl Informationen darstellen als auch Eingaben durch den Besitzer oder Nutzer entgegen nehmen kann.

Eine Ladeelektronik umfasst folglich die kompletten elektrischen- und Informations- und Kommunikationstechnik (IKT)-Elemente je nach Ausprägung der Ausstattung. Beispielsweise können Ladeelektroniken die zum Betrieb der Ladesäule notwendigen Steuerungsmöglichkeiten bereitstellen, und/oder erweiterte Funktionen für eine Steuerung und/oder Regelung der Ladesäule bereitstellen. Auch können beispielsweise Statusinformationen oder dergleichen einem Besitzer oder Nutzer bereitgestellt werden, z. B. mittels einer Anzeigevorrichtung der Ladeelektronik.

Die Ladeelektronik umfasst eine rückseitige Steckverbindung (z.B. einen Stecker), über die die Ladeelektronik alle notwendigen Zuleitungen und/oder Ableitungen von der Ladesäule erhalten kann. Die Ladesäule umfasst eine zu der Steckverbindung der Ladeelektronik korrespondierende Steckverbindung (z.B. eine Buchse). Über die mittels der Steckverbindungen herstellbare Verbindung zwischen der Ladeelektronik und der Ladesäule können insbesondere Eingabeinformationen und Ausgabeinformationen ausgetauscht werden. Eingabeinformationen können beispielsweise Steuereingaben des Besitzers oder Nutzers des Elektrofahrzeugs umfassen. Ferner können Eingabeinformationen beispielsweise Ladepräferenzen des Besitzers oder Nutzers des Elektrofahrzeugs repräsentieren. Eingabeinformationen können beispielsweise mittels einer Benutzerschnittstelle seitens eines Besitzers oder Nutzers eines Elektrofahrzeugs eingegeben werden und entsprechend erfasst werden. Ausgabeinformationen können beispielsweise Informationen hinsichtlich eines Ladevorgangs, und/oder Abfrageinformationen zur Regelung oder Steuerung eines Ladevorgangs umfassen. Ausgabeinformationen können beispielsweise mittels einer von der Ladeelektronik umfassten Anzeigevorrichtung ausgegeben werden.

Es wird vorgeschlagen, dass die Ladeelektronik ein Fixierelement umfasst, so dass die Ladeelektronik im aufgenommenen Zustand in der Öffnung fixiert ist. Mittels des Fixierelements kann beispielsweise eine Fixierung bzw. Arretierung der Ladeelektronik im aufgenommenen Zustand in der Öffnung erfolgen. Das Fixierelement kann beispielsweise ein die Steckverbindung der Ladeelektronik umlaufender Vorsprung /Rücksprung sein, den beispielsweise der Grundkörper aufweist (z.B. an der Rückseite des Grundkörpers). Der Vorsprung (Feder) /Rücksprung (Nut) kann beispielsweise im aufgenommenen Zustand in eine korrespondierende Rücksprung / Vorsprung an der Öffnung eingreifen. Alternativ oder zusätzlich kann das Fixierelement beispielsweise von dem Gehäuse der Ladeelektronik umfasst sein. Beispielsweise kann das Fixierelement an einer der Seitenflächen des Gehäuses von der Ladeelektronik angeordnet sein.

Als Fixierelemente können ferner beispielsweise Einrastelemente, wie etwa Klipse verwendet werden. Diese können beispielsweise in entsprechende Gegenstücke einrasten und die Ladeelektronik an der Ladesäule fixieren. Denkbar sind des Weiteren auch händisch zu betätigende Fixierelemente, wie etwa eine Fixierung mittels einer Schraube oder eines Klemmelementes. Das Fixierelement stellt sicher, dass die Ladeelektronik im aufgenommenen Zustand in der Aufnahme der Ladesäule fixiert bzw. arretiert ist. Ein derartiges Fixierelement kann beispielsweise an der Rückseite des Grundkörpers angeordnet sein. Alternativ oder zusätzlich kann das Fixierelement an dem den Grundkörper zumindest teilweise umschließenden Gehäuse angeordnet sein. Insbesondere kann das Fixierelement an einer Seitenfläche des Gehäuses vorgesehen sein. In einem Ausführungsbeispiel umschließt die Öffnung der Ladesäule im aufgenommenen Zustand zumindest teilweise die Seitenfläche des Gehäuses von der Ladeelektronik. Es können mehrere Fixierelemente von der Ladeelektronik umfasst sein.

Gemäß einem Ausführungsbeispiel wird vorgeschlagen, dass eine Diebstahlschutzsicherung vorgesehen ist, so dass eine in der Öffnung der Ladesäule aufgenommene Ladeelektronik von außen nicht mehr lösbar ist. Dies ist insbesondere bei der Anordnung von Ladeelektroniken an Ladesäulen empfehlenswert, die öffentlich zugänglich sind.

Es wird ferner vorgeschlagen, dass die Diebstahlschutzsicherung ein Einrastelement aufweist, welches von einer Innenseite der Ladesäule aus zugänglich ist und bei Betätigung ein Lösen der Ladeelektronik aus der Ausnahme der Ladesäule heraus ermöglicht.

Die Diebstahlschutzsicherung bewirkt beispielsweise, dass dem Anordnen der Ladeelektronik an der Ladesäule die Ladeelektronik von außen nicht mehr lösbar ist. Ein simples Abziehen von außen der Ladeelektronik von der Ladesäule ist somit nicht mehr möglich. Um einen Austausch einer in der Aufnahme der Ladesäule aufgenommen Ladeelektronik zu ermöglichen, kann beispielsweise die Diebstahlschutzsicherung, wie vorstehend erläutert, entriegelbar sein. Beispielsweise kann dies mittels eines geeigneten Adapters oder dergleichen durchgeführt werden, welcher beispielsweise in eine zur Entriegelung der Diebstahlschutzsicherung vorgesehene Öffnung eingreift.

Gemäß einem Ausführungsbeispiel wird vorgeschlagen, dass die Ladeelektronik im aufgenommenen Zustand mittels der Steckverbindung an der Ladesäule fixierbar ist.

Alternativ ist die Ladeelektronik im aufgenommenen Zustand mittels der Steckverbindung an der Ladesäule fixiert. Hierzu kann die Steckverbindung (z.B. seitens der Ladeelektronik und/oder seitens der Ladesäule) ein Einrastelement aufweisen (z.B. ein Klemmelement, ein hakenartiges Element oder dergleichen). Das Einrastelement rastet in ein entsprechend ausgebildetes Gegenstück beim Verbinden der Steckverbindung durch eine Aufnahme der Ladeelektronik in die Öffnung der Ladesäule ein, so dass die Ladeelektronik an der Ladesäule mittels der Steckverbindung fixierbar bzw. fixiert ist.

Um die Ladestation im nicht fertig installierten Zustand zu sichern, ist es notwendig, dass an den Kontakten für die Ladeelektronik ein Berührschutz vorgesehen ist. Dieser kann beispielsweise durch Entriegelungsmittel bereitgestellt werden. Die Entriegelungsmittel können die Netzanschlusssicherung elektrisch von den Kontakten trennen. Wenn die Ladeelektronik eingesetzt wird, kann mittels einer geeigneten Mechanik der Entriegelungsmittel eine mechanische Verbindung der Netzanschlusssicherung mit den Kontakten erst dann erfolgen, wenn die Ladeelektronik in die Öffnung vollständig oder bis zu einer Mindesttiefe eingesetzt wird. Somit wird bei einer Anordnung der Ladeelektronik in der Öffnung elektrische Verbindung zwischen der Netzanschlusssicherung und der Ladeelektronik freigeschaltet.

Um den Verteilnetzbetreibern die Installation der Ladestation möglichst einfach zu machen, wird vorgeschlagen, dass ein Kabelkanal sich von einer Außenwand des Bodenfundaments durch das Bodenfundament hindurch bis in zumindest Teile der Säule, insbesondere bis zu der Öffnung der Säule erstreckt. Eine Außenwand des Bodenfundaments ist insbesondere eine Seitenwand oder ein Boden des Bodenfundaments. Ausgehend hiervon kann sich der Kabelkanal durch das Bodenfundament bis in die Säule erstrecken. In der Säule kann der Kabelkanal dabei insbesondere bis zu der Öffnung reichen, in der die Netzanschlusssicherung bzw. der Hausanschlusskasten angeordnet wird. Dann kann bei dem Absetzen der Ladestation in dem Schacht das dort liegende Erdkabel unmittelbar durch den Kabelkanal zu der Öffnung geführt werden und dort mit zumindest einer Netzanschlusssicherung elektrisch verbunden werden. Diese Arbeiten sind durch den Verteilnetzbetreiber möglich, so dass in einem einzigen Gewerk die Ladestation aufgestellt werden kann.

Insbesondere sind die Säule und das Bodenfundament aus einem Vollmaterial gebildet. Dabei können die Säule und das Bodenfundament bevorzugt aus Beton gebildet sein. Insbesondere kann dies ein Betongussteil sein. Ein solches Betongussteil ist besonders robust gegenüber Vandalismus. Um Verwitterungen an dem Betongussteil zu vermeiden, ist es möglich, dass eine Hülle über die Säule gestülpt werden kann. Die Hülle kann aus einem Kunststoffteil, insbesondere einem Spritzgussteil sein und eine innere Profilierung aufweisen, die der äußeren Profilierung der Säule entspricht.

Auch ist es möglich, dass das Bodenfundament und die Säule aus einem Spritzgussteil, insbesondere aus Kunststoff gebildet sind. Im diesem Fall ist die Säule und das Bodenfundament hohl. Es wird vorgeschlagen, dass das Bodenfundament ein hohles Gehäuse aufweist und/oder dass die Säule ein hohles Gehäuse aufweist. Sowohl Bodenfundament als auch Säule können durch ein Gehäuse gebildet sein, welches hohl ist. Dies führt zu einem erheblich geringeren Gewicht gegenüber einem Bauteil aus Vollmaterial, insbesondere einem Betongussteil.

Um ein Betongussteil besonders einfach in den Schacht einsetzen zu können, wird auch vorgeschlagen, dass an der Oberseite der Säule oder an der der Säule zugewandten Außenwand des Bodenfundaments zumindest ein Haken vorgesehen ist, der mit dem Material der Säule bzw. dem Bodenfundament verbunden ist. Über diesen Haken kann mittels eines Krans die Ladestation in den Schacht gehoben werden. Insbesondere ein Haken am Oberteil kann in einer Ausnehmung angeordnet sein, so dass dieser nicht aus dem Profil der Ladestation bzw. der Säule herausragt.

Wie bereits erläutert, kann in dem Gehäuse eine Kabeldurchführung gebildet sein. Wird, nachdem das Gehäuse, welches vorzugsweise hohl ist, in den Schacht eingesetzt wurde, das Gehäuse des Bodenfundaments verfüllt, so ist es bevorzugt, wenn die Kabeldurchführung gegenüber dem Inneren des Gehäuses abgedichtet ist. Insbesondere ist eine Abdichtung gegenüber dem Inneren des Gehäuses des Bodenfundaments bevorzugt. Das Gehäuse des Bodenfundaments kann auch gegenüber dem Gehäuse der Säule abgedichtet sein. Lediglich die Kabeldurchführung kann im Inneren des Gehäuses des Bodenfundaments geführt sein.

Nach dem Einsetzen der Ladestation in den Schacht muss diese gegebenenfalls vor einem Umkippen gesichert werden. Dies wird dadurch erreicht, dass das Bodenfundament beschwert wird. Insbesondere durch Befüllen des Gehäuses mit schüttfähigem Gut, wie beispielsweise Sand, Wasser oder dergleichen, kann das Gehäuse des Bodenfundaments beschwert werden. Dadurch wird das Bodenfundament schwerer und die Ladestation hat einen sicheren Stand. Zum Befüllen ist eine nach oben weisende, verschließbare Öffnung zur Aufnahme von Füllmaterial in dem Bodenfundament vorgesehen. Diese Öffnung ist vorzugsweise an der Außenwand, die der Säule zugewandt ist.

Insbesondere bei hohen Ladeleistungen, beispielsweise einer Ladeleistung von über 100 kW, insbesondere über 200 kW, beispielsweise bei bis zu 350 kW entsteht in der Ladestation Wärme, welche nicht mehr durch einfache Konvektion abgeführt werden kann, sondern für die ein Kühlkreislauf notwendig ist. Ein solcher Kühlkreislauf kann beispielsweise mit Kühlflüssigkeit, beispielsweise Wasser, betrieben werden. Die Flüssigkeit kann im Hohlraum des Bodenfundaments gelagert sein. Eine Pumpe im Bodenfundament oder in der Säule kann für eine Zirkulation der Kühlflüssigkeit sorgen.

Wie bereits erläutert, lässt sich die gegenständliche Ladestation besonders einfach aufbauen. Hierzu muss zunächst ein Bodenfundament mit einer Säule aus einem Stück hergestellt werden und anschließend kann dieses Bodenfundament zusammen mit der Säule in einem Fundamentschacht aufgestellt werden. Es ist lediglich ein Aufstellvorgang notwendig und die Ladestation ist mechanisch installiert. Anschließend kann ein Erdkabel durch einen Kabelkanal, der sich durch das Bodenfundament bis zumindest in Teile der Säule erstreckt, verlegt werden. Nachfolgend wird der Gegenstand anhand einer Ausführungsbeispiele zeigenden Zeichnung näher erläutert. In der Zeichnung zeigen:
- Fig. 1: eine beispielhafte Ladestation in einer Ansicht;
- Fig. 2: eine Schnittansicht durch eine beispielhafte Ladestation;
- Fig. 3: eine weitere Schnittansicht durch eine beispielhafte Ladestation;
- Fig. 4: eine weitere Schnittansicht durch eine beispielhafte Ladestation.

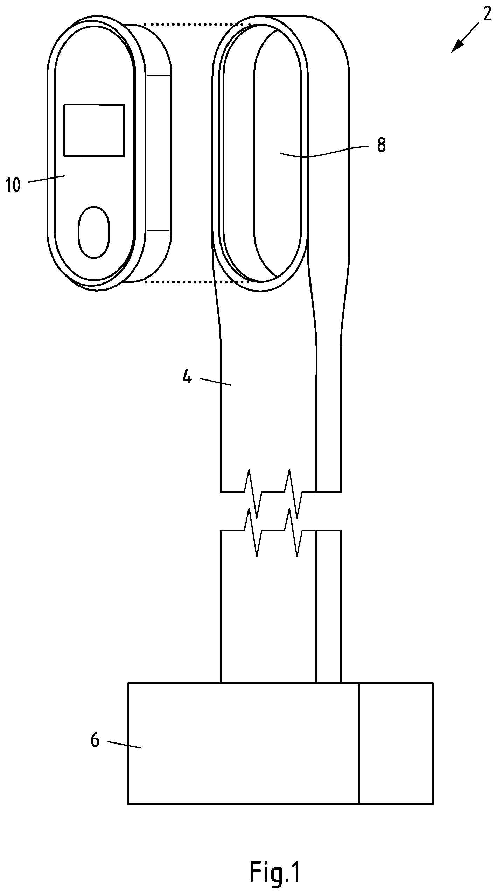

Fig. 1 zeigt eine Ladestation 2 mit einer Ladesäule 4 und einem Bodenfundament 6. In der Ladesäule 4 ist im oberen Bereich eine Öffnung 8 als Aufnahme für eine Ladeelektronik 10 vorgesehen.

Die Ladesäule 4 und das Bodenfundament 6 sind einstückig gebildet. Somit ist es möglich, in einem einzigen Installationsschritt die Ladestation in einen Schacht einzusetzen und unmittelbar eine elektrische Verbindung zwischen einem Verteilnetz und einer Netzanschlusssicherung herzustellen. Die Netzanschlusssicherung ist bevorzugt in der Öffnung 4 in einem dafür vorgesehenen Gehäuse, beispielsweise einem Hausanschlusskasten, vorgesehen.

Nach der Installation der Ladestation 2 ist diese mit dem Bodenfundament 6 fest im Boden verankert. Es ist nunmehr nur noch notwendig, die Ladeelektronik 10 in die Öffnung 8 einzusetzen. In diesem Zusammenhang sei angemerkt, dass die Ladestation 2 ausschließlich die Ladesäule 4 und das Bodenfundament 6 sowie gegebenenfalls ein darin geführtes Verbindungskabel mit einem Verteilnetz, insbesondere einem Ortsnetz, aufweist. Jegliche Ladeelektronik, insbesondere Messelektronik, Ladesteuerung und dergleichen ist in der Ladeelektronik 10 vorhanden. Nur mit aufgesteckter Ladeelektronik 10 ist die Ladestation 2 betriebsbereit.

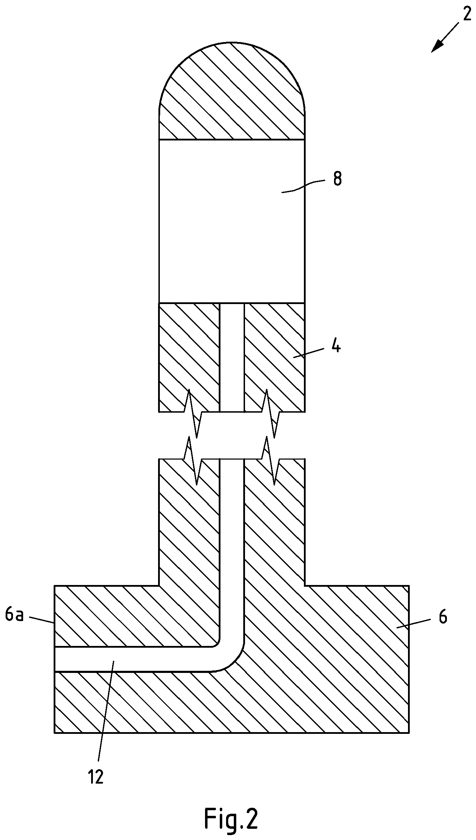

Die Ladestation 2 kann aus einem Vollmaterial gebildet sein. Fig. 2 zeigt einen Schnitt durch eine Ladestation 2 aus einem Vollmaterial. Insbesondere kann dies ein Betongussteil sein. Zu erkennen ist, dass die Ladesäule 4 einstückig mit dem Bodenfundament 6 gebildet ist.

Im Inneren des Bodenfundaments 6 als auch zumindest in Teilen in der Säule 4 verläuft ein Kabelkanal 12. Durch den Kabelkanal 12 kann von einer Seitenwand 6a des Bodenfundamens 6 durch das Bodenfundament 6 und zumindest Teilen der Säule 4 ein Kabel verlegt werden. Der Kabelkanal 12 mündet in der Öffnung 8.

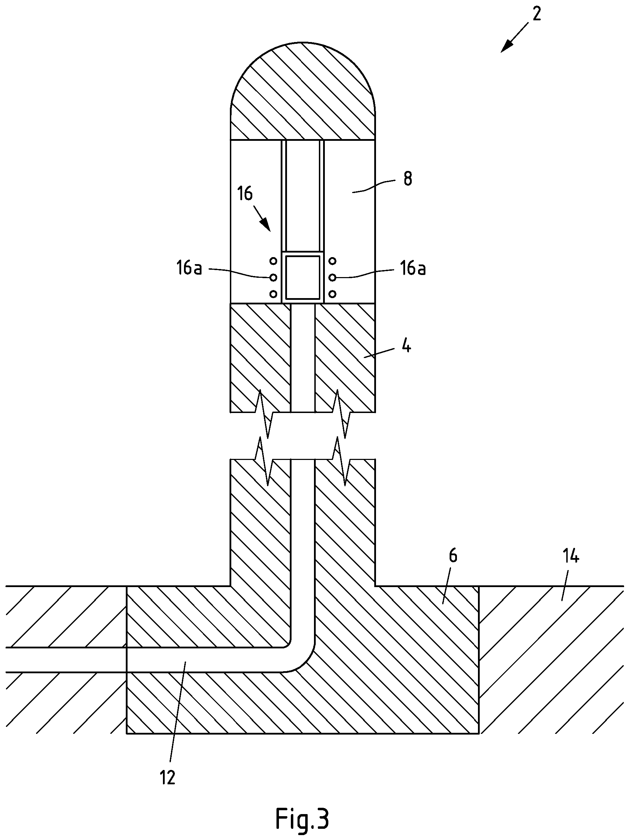

Fig. 3 zeigt die Ladestation 2 in einem eingebauten Zustand. Zu erkennen ist, dass das Bodenfundament 6 im Erdreich 14 eingebaut ist. Ferner ist in der Öffnung 8 der Säule 4 ein Sicherungskasten 16, insbesondere ein Hausanschlusskasten angeordnet. Zu erkennen ist, dass der Sicherungskasten 16 mittig in der Öffnung 8 mit jeweils einem gleichen Abstand zu den Außenwänden der Ladesäule 4 angeordnet ist. An der Außenseite des Sicherungskastens 16 können Kontaktstifte 16a vorgesehen sein, welche mit Kontakten der Ladeelektronik 10 interagieren. Beim Einstecken der Ladeelektronik 10 in die Öffnung 8 können die Kontakte 16a in elektrischen Kontakt mit der Ladeelektronik 10 kommen.

Ein Erdkabel kann durch den Kabelkanal 12 von dem Erdreich 14 bis in den Sicherungskasten 16 verlegt werden. Im Sicherungskasten 16 können Zugentlastungen vorgesehen sein. In dem Sicherungskasten 16 ist eine Netzanschlusssicherung vorgesehen, an die das Erdkabel angeschlossen wird. Die Netzanschlusssicherung ist mit den Kontakten 16a elektrisch verbunden. Nach Installation der Netzanschlusssicherungen ist die Ladestation 2 insofern betriebsbereit, als dass lediglich die Ladeelektronik 10 in die Öffnung 8 eingesteckt werden muss.

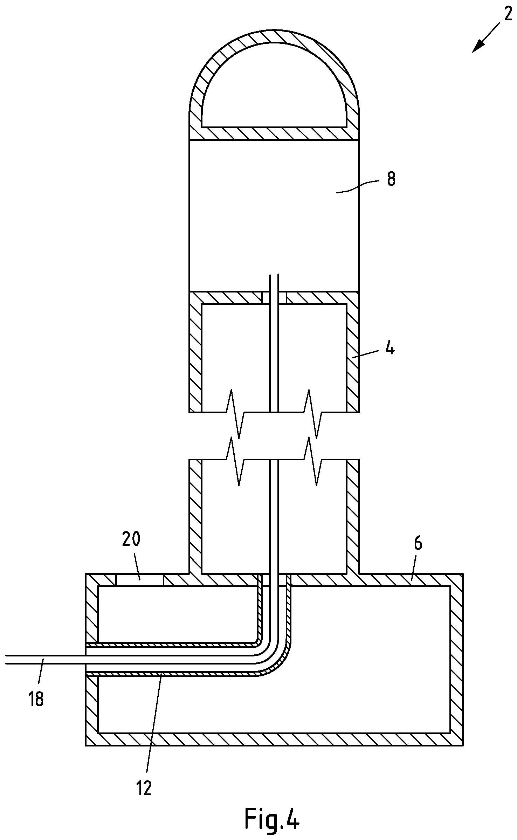

Fig. 4 zeigt ein weiteres Ausführungsbeispiel, bei dem die Ladestation 2 nicht mehr aus einem Vollmaterial gebildet ist, sondern bei dem die Ladesäule 4 und das Bodenfundament 6 jeweils als hohles Gehäuse gebildet sind. Der Kabelkanal 12 ist vorzugsweise wasserdicht durch das Gehäuse des Bodenfundaments 6 geführt. Das Innere des Gehäuses des Bodenfundaments 6 ist abgedichtet gegenüber dem Inneren des Gehäuses des Säule 4. Hierdurch wird sichergestellt, dass kein Material aus dem Gehäuse des Bodenfundaments 6 in das Gehäuse der Säule 4 gelangt. Ein Erdkabel 18 kann durch den Kabelkanal 12 und das Innere des Gehäuses der Ladesäule 4 bis in die Öffnung 8 verlegt werden.

An der Oberseite des Gehäuses des Bodenfundaments 6 kann eine verschließbare Öffnung 20 vorgesehen sein, in die Füllmaterial in das Gehäuse des Bodenfundaments 6 eingefüllt werden kann. Dies kann beispielsweise ein schüttfähiges Gut, insbesondere ein flüssiges Gut, beispielsweise Wasser sein. Nach der Installation der Ladestation 2 in dem Schacht kann durch die Öffnung 20 beispielsweise Wasser in das Bodenfundament 6 eingefüllt werden und somit die Ladestation 2 beschwert werden.

Wird beispielsweise Wasser oder ein anderes Kühlmittel in dem Gehäuse des Bodenfundaments 6 vorgehalten, so kann dieses auch als Kühlmittel für die Ladeelektronik 10 verwendet werden. Hierzu kann beispielsweise eine Pumpe in dem Bodenfundament 6 oder der Ladesäule 4 vorgesehen sein, mit der die Flüssigkeit aus dem Bodenfundament in Bereiche der Ladesäule 4, insbesondere in den Bereich der Ladeelektronik 10 gepumpt werden kann.

### Bezugszeichenliste

- 2: Ladestation
- 4: Ladesäule
- 6: Bodenfundament
- 6a: Seitenwand
- 8: Öffnung
- 10: Ladeelektronik
- 12: Kabelkanal
- 14: Erdreich
- 16: Sicherungskasten
- 16a: Kontakte
- 18: Erdkabel
- 20: Öffnung

## Patentansprüche

1. Ladestation : (2) für Elektrofahrzeuge mit
- einem Bodenfundament (6) und
- einer über dem Bodenfundament (6) angeordneten Säule (4), wobei
- das Bodenfundament (6) mit der Säule (4) einstückig in einer einzigen Baugruppe gebildet ist, und
- die Säule (4) eine quer zu ihrer Längsachse verlaufende, sich in das Innere der Säule (4) erstreckende Öffnung (8) aufweist, wobei die Öffnung (8) zur Aufnahme einer Ladeelektronik (10) eingerichtet ist, wobei die Öffnung (8) als Aufnahme für eine Ladeelektronik (10) gebildet ist und an der Öffnung (8) Verriegelungsmittel für die Ladeelektronik (10) vorgesehen sind.

2. Ladestation nach Anspruch 1,
**dadurch gekennzeichnet,**
- **dass** in der Säule (4) eine Netzanschlusssicherung angeordnet ist.

3. Ladestation nach einem der vorangehenden Ansprüche,
**dadurch gekennzeichnet,**
- **dass** die Öffnung (8) eine Durchgangsöffnung ist.

4. Ladestation nach einem der vorangehenden Ansprüche,
**dadurch gekennzeichnet,**
- **dass** die Öffnung (8) zur Aufnahme einer Netzanschlusssicherung, und/oder eines Hausanschlusskastens gebildet ist.

5. Ladestation nach einem der vorangehenden Ansprüche,
**dadurch gekennzeichnet,**
- **dass** die Öffnung (8) zwei Außenwände der Säule (4) durchbricht.

6. Ladestation nach einem der vorangehenden Ansprüche,
**dadurch gekennzeichnet,**
- **dass** in der Öffnung (8) Anschlusskontakte für die Ladeelektronik (10) gebildet sind.

7. Ladestation nach einem der vorangehenden Ansprüche 2 bis 6,
**dadurch gekennzeichnet,**
- **dass** in der Öffnung (8) Entriegelungsmittel vorgesehen sind, derart, dass eine elektrische Verbindung zwischen der Netzanschlusssicherung und der Ladeelektronik (10) durch die Entriegelungsmittel erst bei einer Anordnung der Ladeelektronik (10) in der Öffnung (8) freigeschaltet ist.

8. Ladestation nach einem der vorangehenden Ansprüche,
**dadurch gekennzeichnet,**
- **dass** sich ein Kabelkanal (12) von einer Außenwand des Bodenfundaments (6) durch das Bodenfundament (6) hindurch bis in zumindest Teile der Säule (4), insbesondere bis zu der Öffnung (8) in der Säule (4), erstreckt.

9. Ladestation nach einem der vorangehenden Ansprüche,
**dadurch gekennzeichnet,**
- **dass** die Säule (4) und das Bodenfundament ; (6) aus Beton gebildet, insbesondere gegossen sind und/oder dass das Bodenfundament (6) und die Säule (4) aus einem Spritzgussteil gebildet sind.

10. Ladestation nach einem der vorangehenden Ansprüche,
**dadurch gekennzeichnet,**
- **dass** das Bodenfundament (6) ein hohles Gehäuse aufweist und/oder dass die Säule (4) ein hohles Gehäuse aufweist.

11. Ladestation nach einem der vorangehenden Ansprüche,
**dadurch gekennzeichnet,**
- **dass** in dem Gehäuse eine Kabeldurchführung gebildet ist, wobei die Kabeldurchführung insbesondere gegenüber dem Inneren des Gehäuses abgedichtet ist.

12. Ladestation nach einem der vorangehenden Ansprüche,
**dadurch gekennzeichnet,**
- **dass** das Bodenfundament (6) eine im Einbauzustand nach oben weisende, verschließbare Öffnung: (20) zur Aufnahme von Füllmaterial aufweist.

13. Ladestation nach einem der vorangehenden Ansprüche,
**dadurch gekennzeichnet,**
- **dass** in dem Bodenfundament (6) ein Kühlmittel gelagert ist und dass das Kühlmittel aus dem Bodenfundament (6) in die Säule (4) transportierbar ist.

## Claims

1. Charging station (2) for electric vehicles with
- a ground foundation (6) and
- a column (4) arranged above the ground foundation (6) wherein,
- the ground foundation (6) and the column (4) are formed in one piece within a single assembly and
- the column (4) comprises an opening which runs transversely to the longitudinal axis of the column (4) and extends into the interior of the column, wherein the opening (8) is arranged for accommodating charging electronics wherein the opening is arranged as receptacle for the charging electronics (10) and locking means for the charging electronics are provided at the opening (8).

2. Charging station according to claim 1,
**characterized in that**,
- a mains connection fuse is arranged in the column (4).

3. Charging station according to one of the preceding claims,
**characterized in that**,
- the opening (8) is a through-opening.

4. Charging station according to one of the preceding claims,
**characterized in that**,
- the opening (8) is formed to accommodate a mains connection fuse and/or a house connection box.

5. Charging station according to one of the preceding claims,
**characterized in that**,
- the opening (8) penetrates two outer walls of the column (4).

6. Charging station according to one of the preceding claims,
**characterized in that**,
- connection contacts for the charging electronics (10) are formed in the opening (8).

7. Charging station according to one of the preceding claims,
**characterized in that**,
- unlocking means are provided in the opening (8), in such a way that an electrical connection between the mains connection fuse and the charging electronics (10) is only unlocked by the unlocking means when the charging electronics (10) is arranged in the opening (8).

8. Charging station according to one of the preceding claims,
**characterized in that**,
- a cable duct (12) extends from an outer wall of the ground foundation (6) through the ground foundation (6) into at least parts of the column (4), in particular up to the opening in the column.

9. Charging station according to one of the preceding claims,
**characterized in that**,
- the column (4) and the ground foundation (6) are made from concrete, in particular cast, and/or **in that** the ground foundation (6) and the column (4) are made from one injection-moulded part.

10. Charging station according to one of the preceding claims,
**characterized in that**,
- the ground foundation (6) has a hollow housing and/or that the column (4) has a hollow housing.

11. Charging station according to one of the preceding claims,
**characterized in that**,
- a cable bushing is formed in the housing, the cable bushing being sealed in particular with respect to the interior of the housing.

12. Charging station according to one of the preceding claims,
**characterized in that**,
- the ground foundation (6) has a closable opening (20) pointing upwards in the installed state for receiving filling material.

13. Charging station according to one of the preceding claims,
**characterized in that**,
- a coolant is stored in the ground foundation (6) and that the coolant can be transported from the ground foundation into the column (4).

## Revendications

1. Station de charge pour véhicules automobiles électriques avec
- une base (6) et
- une borne (4) disposée sur la base (6),
sachant que
- la base (6) est formée d'une seule pièce avec la borne (4) en un seul groupe de composants,
et que
- la borne (4) est dotée d'une ouverture (8), qui s'étend, transversalement par rapport à son axe longitudinal, à l'intérieur de la borne (4), sachant que l'ouverture (8) est destinée à recevoir une électronique de charge (10),
- sachant que l'ouverture (8) est formée en tant que réceptacle pour l'électronique de charge (10) et que des moyens de verrouillage sont prévus sur l'ouverture (8) pour l'électronique de charge (10).

2. Station de charge selon la revendication 1,
**caractérisée en ce que**,
dans la borne (4), est disposé un dispositif de sécurité de raccordement au réseau.

3. Station de charge selon l'une des revendications précédentes,
**caractérisée en ce que**
l'ouverture (8) est une ouverture de passage.

4. Station de charge selon l'une des revendications précédentes,
**caractérisée en ce que**
l'ouverture (8) est conçue pour recevoir un dispositif de sécurité de raccordement au réseau et / ou une boite de raccordement privée ? ménagère hausanschlusskasten.

5. Station de charge selon l'une des revendications précédentes,
**caractérisée en ce que**
l'ouverture (8) traverse deux parois extérieures de la borne (4).

6. Station de charge selon l'une des revendications précédentes,
**caractérisée en ce que**,
dans l'ouverture (8), sont formés des contacts de ra raccordement pour l'électronique de charge (10).

7. Station de charge selon l'une des revendications précédentes,
**caractérisée en ce que**,
dans l'ouverture (8), sont prévus des moyens de déverrouillage de sorte qu'une connexion électrique entre le dispositif de sécurité de raccordement au réseau et l'électronique de charge (10) ne soit libérée par les moyens de déverrouillage que lors d'une disposition de l'électronique de charge (10) dans l'ouverture (8).

8. Station de charge selon l'une des revendications précédentes,
**caractérisée en ce qu'**
un canal de câble (12) s'étend à travers la base (6), à partir d'une paroi extérieure de la base (6) jusque dans tout au moins des parties de la borne (4), en particulier jusqu'à l'ouverture (8) de la borne (4).

9. Station de charge selon l'une des revendications précédentes,
**caractérisée en ce que**
la borne (4) et la base (6) sont fabriquées en béton, en particulier coulées, et / ou que la base (6) et la borne (4) sont réalisées en forme de pièce moulée par injection.

10. Station de charge selon l'une des revendications précédentes,
**caractérisée en ce que**
la base (6) est dotée d'un carter creux et / ou que la borne (4) est dotée d'un carter creux.

11. Station de charge selon l'une des revendications précédentes,
**caractérisée en ce que**,
dans le carter, est pratiqué un passage de câble, sachant que le passage de câble est étanchéifié, en particulier par rapport à l'intérieur du carter.

12. Station de charge selon l'une des revendications précédentes,
**caractérisée en ce que**
la base (6) est dotée d'une ouverture fermable (20), qui, destinée à recevoir un matériau de charge, est dirigée vers le haut à l'état monté.

13. Station de charge selon l'une des revendications précédentes,
**caractérisée en ce que**,
dans la base (6), est stocké un moyen de réfrigération et que le moyen de réfrigération peut être transporté de la base (6) dans la borne (4).
